Europäisches Patentamt

European Patent Office

Office européen des brevets

(19)

(11) Numéro de publication: **0 420 735 A1**

(12) # DEMANDE DE BREVET EUROPEEN

(21) Numéro de dépôt: **90402629.1**

(51) Int. Cl.5: **B23Q 1/02**

(22) Date de dépôt: **25.09.90**

(30) Priorité: **27.09.89 FR 8912663**

(43) Date de publication de la demande:
**03.04.91 Bulletin 91/14**

(84) Etats contractants désignés:
**DE ES GB IT**

(71) Demandeur: **SOCIETE HELIS**
**97, Avenue de Peygros**
**F-06530 Peymeinade(FR)**

(72) Inventeur: **Line, Henri**
**97 Avenue de Peygros**
**F-06530 Peymeinade(FR)**

(74) Mandataire: **Hasenrader, Hubert et al**
**Cabinet BEAU DE LOMENIE 55, rue**
**d'Amsterdam**
**F-75008 Paris(FR)**

(54) Machine d'usinage à montant mobile et à broche horizontale.

(57) L'invention se rapporte à une machine d'usinage (1) à montant mobile et à broche horizontale, dans laquelle le montant mobile (2) est disposé entre un banc inférieur fixe (4a) et un banc supérieur fixe (4b) reliés entre eux par un support statique rigide (40) situé derrière le montant mobile (2), et est guidé à chacune de ses extrémités (2a, 2b) par des moyens de guidage parallèles prévus sur lesdits montants. Le montant mobile (2) est de plus entraîné à chacune de ses extrémités (2a, 2b) par des moyens d'entraînement synchronisés (13a, 13b).

# FIG.4

EP 0 420 735 A1

## MACHINE D'USINAGE À MONTANT MOBILE ET À BROCHE HORIZONTALE.

La présente invention concerne une machine d'usinage à montant mobile et à broche horizontale.

Toutes les machines d'usinage à fraiser, aléser, percer, à montant mobile et à broche horizontale connues à ce jour ont un montant mobile reposant sur une semelle qui coulisse sur un banc fixe lui-même lié à un massif en béton. La broche est mobile verticalement le long du montant et peut se déplacer à l'horizontale selon une perpendiculaire au plan de déplacement du montant. Ces machines permettent d'usiner des pièces de très grandes dimensions qui restent fixes pendant le travail.

Ces machines présentent deux inconvénients majeurs liés à leur conception. Elles ont en premier lieu une rigidité variable avec la position verticale de la broche, ce qui fait qu'elles ne permettent pas d'exécuter dans de bonnes conditions des usinages tant en ébauche qu'en finition lorsque la broche est en position haute, à cause des vibrations résultant du manque de rigidité dans le cas d'ébauche et à cause des déformations amplifiées dès que le rapport de la hauteur de la broche à la largeur des glissières augmente dans le cas d'un travail de finition. En deuxième lieu, le dimensionnement du montant nécessaire à l'obtention d'un minimum de rigidité a comme conséquence que l'ensemble mobile devient très lourd, ce qui fait que ces machines sont relativement lentes dans leurs déplacements et dans leurs accélérations.

Le but de la présente invention est de remédier à ces inconvénients, et de proposer une machine d'usinage à montant mobile et à broche horizontale qui permette des usinages parfaits en ébauche et en finition et qui soit rapide et précise.

Le but est atteint selon l'invention par le fait que le montant mobile est disposé entre un banc inférieur et un banc supérieur reliés entre eux par un support statique rigide situé derrière le montant mobile et est guidé à chacune de ses extrémités par des moyens de guidage parallèles prévus sur lesdits bancs.

Grâce à cette structure le montant mobile est maintenu et guidé à chacune de ses extrémités, ce qui empêche tout déplacement latéral de la broche quelle que soit sa position verticale sur le montant mobile. Ceci augmente considérablement sa rigidité à dimensionnement égal. Il est donc possible d'alléger le montant mobile tout en lui conservant une rigidité satisfaisante.

De préférence, le montant mobile est entraîné à chacune de ses extrémités par des moyens d'entraînement synchronisés.

Le montant mobile se déplace ainsi parallèlement à lui-même. Comme il est guidé et entraîné à chaque extrémité par des dispositifs très rigides et qu'il est plus léger que le montant mobile de la machine de l'art antérieur, il peut se déplacer très rapidement et avec de fortes accélérations.

Avantageusement, le support statique rigide est réalisé en béton armé. Il peut également être réalisé par un assemblage de poutrelles métalliques renforcé par un remplissage de béton.

Avantageusement, les moyens de guidage comportent une glissière prévue sur le banc.

Avantageusement, les moyens d'entraînement sont prévus au voisinage de la glissière correspondante.

D'autres avantages et caractéristiques de l'invention apparaîtront à la lecture d'un mode de réalisation faite à titre d'exemple non limitatif et en référence aux dessins annexés dans lesquels :

La figure 1 représente une vue de face de la machine d'usinage à montant mobile et à broche horizontale de l'art antérieur,

La figure 2 représente une vue latérale de la machine de la figure 1,

La figure 3 est une vue de face de la machine d'usinage selon l'invention et

La figure 4 est une vue latérale de la machine d'usinage de la figure 3.

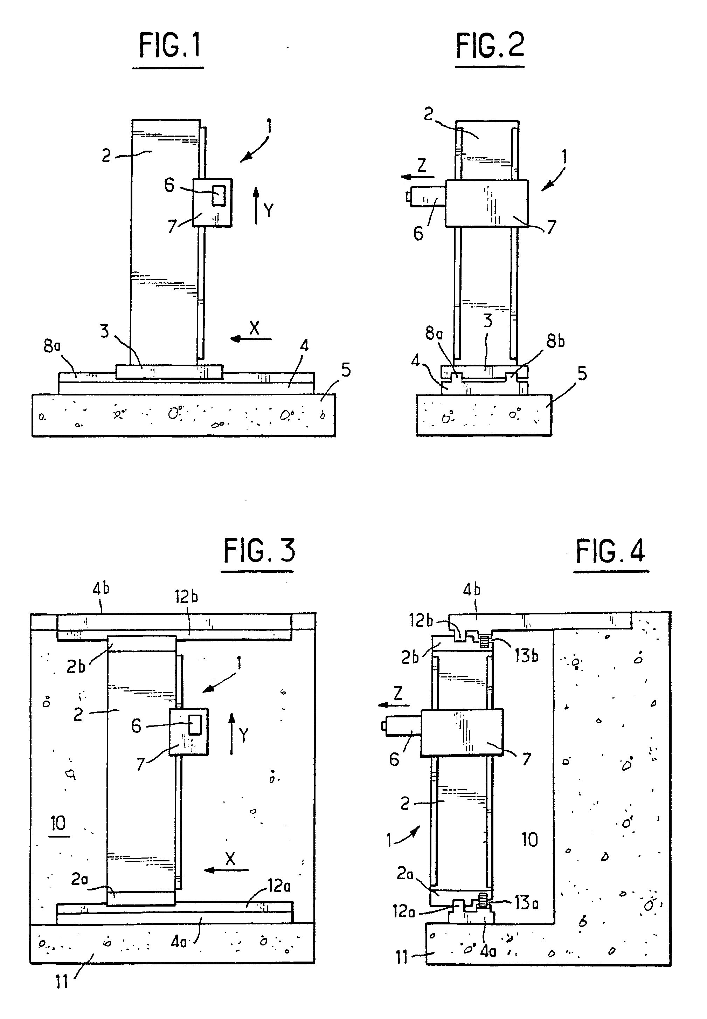

Les figures 1 et 2 représentent une machine d'usinage 1 à montant mobile et à broche horizontale de l'art antérieur.

Cette machine d'usinage 1 comporte un montant mobile 2 reposant sur une semelle 3 qui coulisse sur un banc fixe 4 lui-même lié rigidement à un massif en béton 5. Une broche 6, portée par un support de broche 7 mobile verticalement le long du montant mobile 2, peut se déplacer à l'horizontale et perpendiculairement au plan vertical dans lequel le montant mobile 2 peut se déplacer. La semelle 3 est guidée sur le banc fixe 4 à l'aide de deux glissières parallèles 8a et 8b distantes d'une longueur L. Ces glissières 8a et 8b supportent et guident le montant mobile 2.

Cette machine 1 permet d'usiner des pièces de grandes dimensions disposées au voisinage de la machine 1 et qui restent fixes pendant le travail, et elle est munie de moteurs actionnés par un organe de commande, non représenté sur le dessin, permettant le déplacement horizontal du montant fixe 2 selon l'axe X, le déplacement vertical du support de broche 7 selon l'axe Y et le déplacement horizontal de la broche 6 selon l'axe Z perpendiculaire au plan défini par les axes X et Y, en fonction du plan d'usinage de la pièce.

Les figures 3 et 4 représentent une machine d'usinage 1 à montant mobile et à broche horizontale conforme à l'invention. Les éléments de cette machine identiques aux éléments de la machine de l'art antérieur portent les mêmes références.

Comme on le voit clairement sur le dessin, le montant mobile 2, sur lequel est monté un support de broche 7 mobile verticalement selon l'axe Y et portant la broche 6 mobile horizontalement selon l'axe Z, est disposé entre un banc inférieur fixe 4a et un banc supérieur fixe 4b parallèle au banc fixe 4a. Le banc inférieur 4a est situé en dessous de l'extrémité inférieure 2a du montant mobile 2 et le banc supérieur 4b est situé au-dessus de l'extrémité supérieure 2b du montant mobile 2.

Le banc supérieur 4b s'étend vers l'arrière du montant mobile 2, du côté opposé à la broche 6 et il est lié rigidement à un support statique rigide 10 vertical disposé à l'arrière du montant mobile 2. Le support statique 10 est prolongé à sa partie inférieure par un bloc horizontal 11 qui s'étend vers l'avant du montant mobile 2 et sur lequel est fixé le banc inférieur 4a.

Le banc inférieur 4a comporte une glissière longitudinale 12a coopérant avec l'extrémité inférieure 2a du montant mobile 2, et le banc supérieure 4b comporte également une glissière longitudinale 12b parallèle à la glissière 12a et coopérant avec l'extrémité supérieure 2b du montant mobile 2a. La glissière inférieure 12a supporte ainsi le montant mobile 2 et les deux glissières 12a et 12b permettent de guider le montant mobile 2 pendant son déplacement selon l'axe X et de le maintenir transversalement. Les deux glissières 12a et 12b, éloignées l'une de l'autre, constituent les moyens de guidage du montant mobile 2.

Le montant mobile 2 est déplacé selon l'axe X parallèle aux glissières 12a et 12b par des moyens d'entraînement actionnés par l'organe de commande non représenté sur le dessin.

De préférence, le montant mobile 2 est entraîné à chacune de ses extrémités 2a et 2b par des dispositifs d'entraînement synchronisés 13a et 13b placés respectivement au voisinage du guidage inférieur et du guidage supérieur. Chaque dispositif d'entraînement est constitué de façon connue soit par une vis soit par boîte et crémaillère.

Les deux dispositifs d'entraînement 13a et 13b peuvent être synchronisés soit mécaniquement soit électriquement. Grâce à ce double entraînement du montant mobile 2, celui-ci se déplace le long de l'axe X en restent parallèle à lui-même.

La machine d'usinage 1 comporte en plus des moteurs pour actionner les dispositifs d'entraînement 13a et 13b, pour déplacer verticalement le support de broche 7, et déplacer horizontalement la broche 6, ces moteurs étant commandés par un organe de commande en fonction d'un programme d'usinage.

Le support statique 10 relient rigidement le banc inférieur 4a et le banc supérieur 4b est conçu pour qu'il soit très rigide, de manière à éviter des vibrations et à maintenir le montant mobile 2 dans le plan vertical défini par les axes X et Y quelle que soit la position verticale de la broche.

Il s'étend latéralement sur toute la longueur des bancs 4a et 4b, et il peut être réalisé en béton armé comme un massif de fondation. Dans ce cas, la machine d'usinage 1 est non déplaçable.

Il peut également être réalisé avec eu moins un montent en béton spécial indépendant du massif de fondation, ou par un assemblage de poutrelles métalliques renforcé par un remplissage de béton.

## Revendications

1. Machine d'usinage à montant mobile et à broche horizontale, caractérisée en ce que le montent mobile (2) est disposé entre un banc inférieur fixe (4e) et un banc supérieur fixe (4b) reliés entre eux par un support statique rigide (10) situé derrière le montant mobile (2), et est guidé à chacune de ses extrémités (2a, 2b) par des moyens de guidage (12a, 12b) parallèles prévus sur lesdits bancs (4a, 4b).

2. Machine selon le revendication 1 caractérisée en ce que le montant mobile (2) est entraîné à chacune de ses extrémités (2a, 2b) par des moyens d'entraînement synchronisés (13a, 13b).

3. Machine selon l'une quelconque des revendications 1 et 2, caractérisée en ce que le support statique rigide (10) est réalisé en béton armé et constitue le massif de fondation de la machine.

4. Machine selon l'une des revendications 1 et 2, caractérisée en ce que le support statique rigide (10) est réalisé par au moins un montant en béton spécial indépendant du massif de fondation.

5. Machine selon l'une quelconque des revendications 1 et 2, caractérisée en ce que le support statique rigide (10) est réalisé par un assemblage de poutrelles métalliques renforcé par un remplissage de béton.

6. Machine selon l'une quelconque des revendications 1 à 5, caractérisée en ce que les moyens de guidage comportent au moins une glissière prévue sur chaque banc (4a, 4b).

7. Machine selon le revendication 6, caractérisée en ce que le montant mobile (2) est entraîné à chacune de ses extrémités (2a, 2b) par des moyens d'entraînement (13a, 13b) prévus au voisinage de le glissière correspondante (12a, 12b).

8. Machine selon l'une des revendications 1 à 7, caractérisée en ce que le support statique rigide s'étend sur toute le longueur des bancs (4a, 4b)

FIG.1

FIG.2

FIG.3

FIG.4

# RAPPORT DE RECHERCHE EUROPEENNE

Numéro de la demande

**EP 90 40 2629**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 472 960 (ODESSKOE) <br> * Revendication 1; figure 6 * <br> — — — | 1 | B 23 Q 1/02 |
| A | DE-C-5 076 90 (SANDBERG) <br> — — — | | |
| A | GB-A-1 106 081 (SMITH) <br> — — — | | |
| A | EP-A-0 194 173 (C.E.C.M.O.) <br> — — — | | |
| A | CH-A-6 126 10 (STUDER) <br> — — — | | |
| A | DE-A-2 521 036 (DECKEL) <br> — — — | | |
| A | FR-A-2 305 262 (FISCHER) <br> — — — | | |
| A | US-A-3 800 636 (ZAGAR) <br> — — — — — | | |

|  | DOMAINES TECHNIQUES RECHERCHES (Int. Cl.5) |
|---|---|
| | B 23 Q <br> B 23 C |

Le présent rapport de recherche a été établi pour toutes les revendications

| Lieu de la recherche | Date d'achèvement de la recherche | Examinateur |
|---|---|---|
| La Haye | 04 décembre 90 | DE GUSSEM J.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

& : membre de la même famille, document correspondant